# FASCICULE DE BREVET EUROPEEN

(11) **EP 3 261 904 B1**
(45) Date de publication et mention de la délivrance du brevet: **03.04.2019**
(21) Numéro de dépôt: 16707927.6
(22) Date de dépôt: 16.02.2016
(51) Int. Cl.: B62D 25/08, B62D 29/00

(54) **ASSEMBLAGE AMÉLIORE D'INSERTS DE RENFORT PAR UN MATÉRIAU POLYMÈRE ET FACE AVANT TECHNIQUE DE VÉHICULE AUTOMOBILE COMPRENANT UN TEL ASSEMBLAGE**
VERBESSERTE VERSTÄRKUNGSEINSATZANORDNUNG MITTELS EINES POLYMERMATERIALS UND TECHNISCHE KRAFTFAHRZEUGFRONTFLÄCHE MIT SOLCH EINER ANORDNUNG
IMPROVED REINFORCING INSERT ASSEMBLY BY MEANS OF A POLYMER MATERIAL, AND TECHNICAL MOTOR VEHICLE FRONT SURFACE INCLUDING SUCH AN ASSEMBLY

(30) Priorité: 24.02.2015 FR 1551549
(43) Date de publication de la demande: 03.01.2018
(73) Titulaire: Renault S.A.S., 92100 Boulogne-Billancourt (FR)
(72) Inventeur: AESCHLIMANN, Jean Louis, 78390 Bois d'Arcy (FR); FLANDIN, Michael, 28410 Broue (FR)
(86) Numéro de dépôt international: PCT/FR2016/050354
(87) Numéro de publication internationale: WO 2016/135394

(56) Documents cités:
- US-A1- 2004 105 949
- US-A1- 2011 133 517

## Description

L'invention concerne un assemblage amélioré d'inserts de renfort par un matériau polymère.

Plus particulièrement, l'assemblage selon l'invention fait partie d'une face avant technique de véhicule automobile, notamment de la partie inférieure de celle-ci.

On appelle dans le métier « face avant technique » (FAT) une structure qui se trouve en avant du bloc moteur et qui a pour fonction de supporter différents organes, principalement le radiateur du bloc moteur. La FAT peut prendre de multiples formes. Dans certains cas, elle se réduit à une simple poutre transversale. Dans d'autres cas, elle constitue un châssis de forme plus ou moins complexe intégrant une « valise de refroidissement ». Par ce terme, on désigne l'ensemble des éléments nécessaires au refroidissement du moteur, parfois empilés en couches ou en partie superposés. La valise de refroidissement se compose classiquement du radiateur à eau de refroidissement moteur, éventuellement de l'échangeur air-air (Refroidisseur Air Suralimentation- RAS) et du condenseur. La FAT intègre en outre différentes fonctions telles que support de butées de capot, support de serrure de capot ou d'un jambage supportant la serrure de capot, etc.

Pour un gain en compacité et en masse, certaines FAT forment un cadre obtenu par assemblage de deux traverses par des montants verticaux, ce cadre comprenant des inserts de renfort recouverts au moins partiellement de matériau polymère.

Pour assurer la rigidité d'un tel cadre, il s'avère nécessaire de fixer les inserts de renfort les uns aux autres. Cette fixation peut être réalisée avant de recouvrir les inserts d'un matériau polymère, par exemple par soudage, vissage ou rivetage, ou après, généralement par vissage ou rivetage. Ces opérations de fixation nécessitent cependant des opérations de positionnement et de fixation qui complexifient le procédé d'assemblage et augmentent les coûts d'assemblage.

Certaines solutions consistent à créer une zone de recouvrement et d'encastrement des inserts avant de les recouvrir de matériau polymère. Cette solution permet d'obtenir un assemblage robuste sans opération de soudage, vissage ou rivetage, mais résulte en un assemblage volumineux et lourd.

D'autres solutions consistent à réaliser une structure en deux parties distinctes inférieure et supérieure, chaque partie comprenant des portions de montants verticaux. Un tel assemblage est cependant volumineux et les deux parties ne sont pas reliées entre elles.

Une autre solution consiste enfin à positionner les inserts de sorte qu'ils ne se touchent pas et à les enrober de matériaux polymère. La tenue mécanique de cet assemblage résulte alors uniquement du matériau polymère reliant les inserts et est relativement limitée.

Le document US 2011/133517 A1 décrit un assemblage selon le préambule de la revendication 1.

Il existe donc un besoin pour un assemblage robuste et léger d'inserts de renfort, qui peut être réalisé de manière simple et peu coûteuse.

L'invention vise à pallier ces inconvénients en proposant un assemblage d'un premier insert de renfort longitudinal et d'un deuxième insert de renfort longitudinal par un matériau polymère les recouvrant au moins partiellement au moins au niveau de leur jonction, chaque insert de renfort présentant une paroi de fond encadrée de deux parois latérales et une section transversale ouverte concave, notamment sensiblement en forme de U ou Ω, les directions longitudinales desdits inserts de renfort étant sensiblement perpendiculaires, caractérisé en ce que :
- le premier insert de renfort comporte une extrémité recourbée dont une extrémité libre définit une bordure en appui plan contre la paroi de fond du deuxième insert de renfort du côté convexe de celui-ci,
- l'extrémité recourbée du premier insert de renfort et le deuxième insert de renfort présentent chacun au niveau de leur jonction une ouverture traversant leur paroi de fond, lesdites ouvertures définissant un passage traversant les deux inserts de renfort suivant une direction parallèle à la direction longitudinale du premier insert de renfort,
- le matériau polymère forme au moins un élément de renfort s'étendant au moins en partie à l'intérieur du passage et reliant le premier insert de renfort au deuxième insert de renfort.

Un tel assemblage présente l'avantage d'être robuste, sans nécessiter d'assemblage préalable des inserts de renfort par vissage, soudage, rivetage ou autre. Autrement dit, les inserts sont assemblés uniquement par le matériau polymère tout en restant en contact direct. En particulier, l'élément de renfort traversant les deux inserts de renfort au niveau de leur jonction permet de renforcer cette dernière en jouant le rôle d'une clavette. Notamment, le fait que le passage s'étende suivant une direction parallèle à la direction longitudinale du premier insert de renfort permet de réaliser l'élément de renfort de manière simple lors du moulage du matériau polymère. Ceci permet un gain de temps au montage et un gain en poids de la structure. Enfin, le recouvrement entre les premier et deuxième inserts est limité à une bordure, de sorte que ce recouvrement n'augmente pas de manière significative le poids de l'assemblage.

Les inserts de renfort peuvent être métalliques ou en matériau polymère. Les inserts de renfort peuvent par exemple être en aluminium, en alliage à base d'aluminium ou en acier, notamment en acier inoxydable. Ils peuvent également être en polypropylène ou polyamide, éventuellement renforcé, par exemple par des fibres de verre, des fibres de carbone ou autres, ou tout autre matériau polymère présentant la rigidité recherchée.

Le matériau polymère enrobant au moins partiellement les inserts de renfort peut également être du polypropylène ou un polyamide.

Avantageusement, les inserts de renfort peuvent être formés de parois planes, ou sensiblement planes, reliées les unes aux autres suivant un bord longitudinal. Ceci permet de réaliser facilement des inserts robustes. Ainsi, un insert de renfort sensiblement en forme de U peut être formé de trois parois planes, ou sensiblement planes, reliées deux à deux, de préférence à angle droit ou sensiblement à angle droit. Un insert de renfort sensiblement en forme de Ω peut être formé de trois parois planes, ou sensiblement planes, reliées deux à deux, de préférence à angle droit ou sensiblement à angle droit, les deux parois d'extrémité comprenant sur un bord longitudinal libre, un rebord longitudinal perpendiculaire, ou sensiblement perpendiculaire, à la paroi dont il est solidaire.

Avantageusement, afin de renforcer la robustesse de l'assemblage, l'élément de renfort peut relier des bords de l'ouverture du premier insert de renfort à des bords de l'ouverture du deuxième insert de renfort. Ceci permet de limiter les ruptures d'inertie au niveau de chaque insert et ainsi de renforcer l'assemblage.

Avantageusement, l'ouverture du premier insert de renfort peut être délimitée en partie par un premier bord situé dans une partie de la paroi de fond parallèle à la direction longitudinale du premier insert de renfort et en partie par un deuxième bord opposé situé dans une partie de la paroi de fond sensiblement perpendiculaire à la direction longitudinale du premier insert de renfort. Autrement dit, l'ouverture du premier insert de renfort est alors disposée au niveau de la courbure de l'extrémité recourbée, ses bords extrêmes étant dans des parties planes de l'insert de renfort. L'élément de renfort peut alors relier le premier bord au moins au deuxième bord opposé du premier insert de renfort et à un bord de l'ouverture du deuxième insert de renfort. L'élément de renfort relie ainsi des bords opposés du passage pour une meilleure robustesse de l'assemblage au niveau de la jonction des inserts.

Avantageusement, les premier et deuxième bords du premier insert de renfort sont parallèles entre eux et au bord de l'ouverture du deuxième insert de renfort auquel ils sont reliés via l'élément de renfort. Ce dernier peut notamment s'étendre le long des bords qu'il relie et/ou perpendiculairement (ou sensiblement perpendiculairement) aux bords qu'il relie.

Avantageusement, le deuxième bord de l'ouverture du premier insert de renfort peut coïncider avec un bord de l'ouverture du deuxième insert de renfort. Ceci permet de simplifier le positionnement relatif des premier et deuxième inserts de renfort et permet également d'améliorer la jonction des inserts au niveau de ces bords adjacents par le matériau polymère.

L'ouverture du premier insert de renfort peut présenter quatre bords parallèles deux à deux, par exemple reliés à angle droit. Cette ouverture est avantageusement située au niveau de l'extrémité recourbée du premier insert de renfort de sorte que certaines de ses parois sont courbes, de même courbure que l'extrémité recourbée.

L'ouverture du deuxième insert de renfort peut présenter une forme de quadrilatère, par exemple de rectangle, mais d'autres formes peuvent être envisageables.

Avantageusement, les ouvertures des premier et deuxième inserts présentent un même nombre de bords, de préférence quatre.

De manière générale, quelque soit la forme des ouvertures, celles-ci sont avantageusement conformées de sorte que la projection de l'ouverture du premier insert de renfort suivant la direction longitudinale de celui-ci dans le plan de la paroi de fond du deuxième insert de renfort est située à l'intérieur de l'ouverture du deuxième insert de renfort ou coïncide avec cette ouverture ou encore coïncide en partie avec cette ouverture et pour le reste est située à l'intérieur de cette ouverture. Ceci permet d'accéder à la totalité de l'ouverture du premier insert de renfort via l'ouverture du deuxième insert de renfort.

Dans un mode de réalisation particulier, l'élément de renfort peut présenter :
- une première paroi inclinée par rapport à la direction longitudinale du premier insert de renfort, ladite première paroi traversant l'ouverture du premier insert de renfort et s'étendant de part et d'autre de celui-ci depuis un bord de cette ouverture, au dessus de l'ouverture du deuxième insert de renfort,
- une deuxième paroi et une troisième paroi opposée à la deuxième paroi, reliant chacune un bord de la première paroi à un bord opposé (en vis-à-vis) de l'ouverture du deuxième insert de renfort.

On comprend ainsi que les parois de l'élément de renfort définissent trois faces fermées du passage qui renforcent la jonction des deux inserts de renfort. Ces faces peuvent par exemple être reliées par des angles droits ou sensiblement droits.

L'élément de renfort peut en outre présenter une quatrième paroi et une cinquième paroi opposée à la quatrième paroi, reliant chacune un bord de la première paroi à un bord opposé de l'ouverture du deuxième insert de renfort, lesdites quatrième et cinquième parois définissant avec les première, deuxième et troisième parois un hexaèdre dont une face est ouverte. Les parois de l'élément de renfort définissent alors cinq faces fermées du passage. L'élément de renfort est ainsi particulièrement robuste. Pour une réalisation simple, l'hexaèdre défini par les parois de l'élément de renfort peut être un parallélépipède rectangle. Cet hexaèdre peut toutefois présenter une autre forme, mais de préférence une forme qui peut être obtenue de manière simple par moulage, au moyen d'un outil déplacé suivant une direction parallèle à la direction longitudinale du premier insert de renfort.

Avantageusement, afin d'améliorer la robustesse de l'assemblage, l'élément de renfort peut s'étendre au moins en partie à l'intérieur du volume défini par la concavité du deuxième insert de renfort, notamment sur toute la hauteur de ce volume mesurée perpendiculairement à la paroi de fond du deuxième insert de renfort.

Afin de renforcer davantage la liaison entre les inserts de renfort, la bordure de l'extrémité recourbée du premier insert de renfort peut être assemblée au deuxième insert de renfort par au moins un élément de fixation choisi parmi un ensemble vis-écrou, un rivet. A cet effet, la bordure et la paroi de fond du deuxième insert de renfort peuvent présenter des orifices traversant disposés en vis-à-vis pour le passage de cet élément de fixation.

L'invention concerne également une face avant technique de véhicule automobile comprenant au moins un assemblage selon l'invention, dans laquelle le deuxième insert de renfort forme une traverse horizontale, notamment inférieure, et le premier insert de renfort forme un montant vertical. Notamment, un autre premier insert de renfort peut former un deuxième montant vertical de la FAT, solidarisé au même deuxième insert de renfort que le premier insert de renfort de la même manière que le premier insert de renfort décrit. En variante, la FAT pourrait comprendre une autre traverse horizontale, notamment supérieure, solidarisée de la même manière aux deux premiers inserts de renfort verticaux.

L'invention concerne également un procédé de fabrication d'un assemblage selon l'invention, cet assemblage comprenant au moins un premier insert de renfort longitudinal et au moins un deuxième insert de renfort longitudinal, ledit procédé comprenant :
(i) une étape de réalisation des premier et deuxième inserts de renfort, chaque insert de renfort présentant une paroi de fond encadrée de deux parois latérales et une section transversale ouverte concave, notamment sensiblement en forme de U ou Ω, au cours de laquelle :
   - on recourbe une extrémité du premier insert de renfort est et on la perce afin de former une ouverture traversant sa paroi de fond,
   - on perce le deuxième insert de renfort afin de former une ouverture traversant sa paroi de fond,
(ii) une étape de positionnement des inserts de renfort réalisés à l'étape précédente dans un moule, notamment un moule en plusieurs parties, dans laquelle les inserts de renfort sont disposés de sorte que leurs directions longitudinales soient sensiblement perpendiculaires, et au cours de laquelle une bordure définie par une extrémité libre de l'extrémité recourbée du premier insert de renfort est positionnée en appui plan contre la paroi de fond du deuxième insert, du côté convexe de celui-ci, de sorte que les ouvertures définissent un passage traversant les deux inserts de renfort suivant une direction parallèle à la direction longitudinale du premier insert de renfort,
(iii) une étape d'injection d'un matériau polymère à l'intérieur du moule, au cours de laquelle un matériau polymère recouvre au moins partiellement lesdits inserts de renfort au moins au niveau de leur jonction et forme au moins un élément de renfort s'étendant au moins en partie à l'intérieur du passage et reliant le premier insert de renfort au deuxième insert de renfort.

L'assemblage selon l'invention est ainsi particulièrement simple à réaliser, l'étape d'injection permettant de réaliser à la fois l'injection de matériau polymère et un assemblage robuste des inserts de renfort, sans nécessiter d'étapes préalables distinctes d'assemblage des inserts de renfort.

Les premier et deuxième inserts de renfort peuvent être réalisés l'un après l'autre ou simultanément lors de l'étape de réalisation (i) des inserts de renfort.

L'extrémité du premier insert de renfort peut être recourbée par une opération de cintrage ou autre. Les ouvertures peuvent être réalisées par emboutissage, de préférence avant la formation de l'extrémité recourbée.

Le procédé selon l'invention peut en outre comprendre une étape (iv) de fixation de la bordure de l'extrémité recourbée au deuxième insert de renfort par des vis, rivets et similaire, cette fixation étant réalisée après le démoulage de l'assemblage obtenu à l'issue de l'étape d'injection (iii).

Avantageusement, au cours de la deuxième étape (ii), les inserts de renfort peuvent être disposés dans une première partie de moule suivant une première direction perpendiculaire aux directions longitudinales des premier et deuxième inserts de renfort, puis une deuxième partie de moule est appliquée contre la première partie de moule suivant ladite première direction et une troisième partie de moule est appliquée du côté concave du deuxième insert de renfort contre les première et deuxième parties de moule suivant une deuxième direction parallèle à la direction longitudinale du premier insert de renfort, ladite troisième partie de moule comportant une partie traversant les ouvertures des premier et deuxième inserts de renfort afin de former ledit élément de renfort.

Après l'étape d'injection (ii), les première et deuxième parties de moule peuvent alors être séparées par un mouvement d'écartement parallèle à ladite première direction et la troisième partie de moule est ôtée par un mouvement d'écartement parallèle à ladite deuxième direction.

L'assemblage selon l'invention peut ainsi être réalisé de manière simple, par des mouvements de moule simples à mettre en oeuvre.

L'invention est maintenant décrite en référence aux dessins annexés, non limitatifs, dans lesquels :
- la figure 1 représente une vue en perspective partielle des inserts de renfort d'un assemblage selon l'invention, avant leur positionnement relatif ;
- les figures 2 et 3 représentent des vues en perspective partielle avant et arrière respectivement des inserts de renfort représentés figure 1 prêts à être recouverts partiellement de matériau polymère ;
- les figures 4 et 5 représentent des vues en perspective partielles avant et arrière respectivement d'un assemblage formé avec les inserts représentés figures 1-3 ;
- la figure 6 représente une section de cet assemblage suivant un plan XZ.

Sur les figures, les mêmes éléments sont désignés par les mêmes références.

Dans la présente description, les termes avant, arrière, supérieur, inférieur, font référence aux directions avant et arrière d'un véhicule, lorsque l'assemblage est monté sur un véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

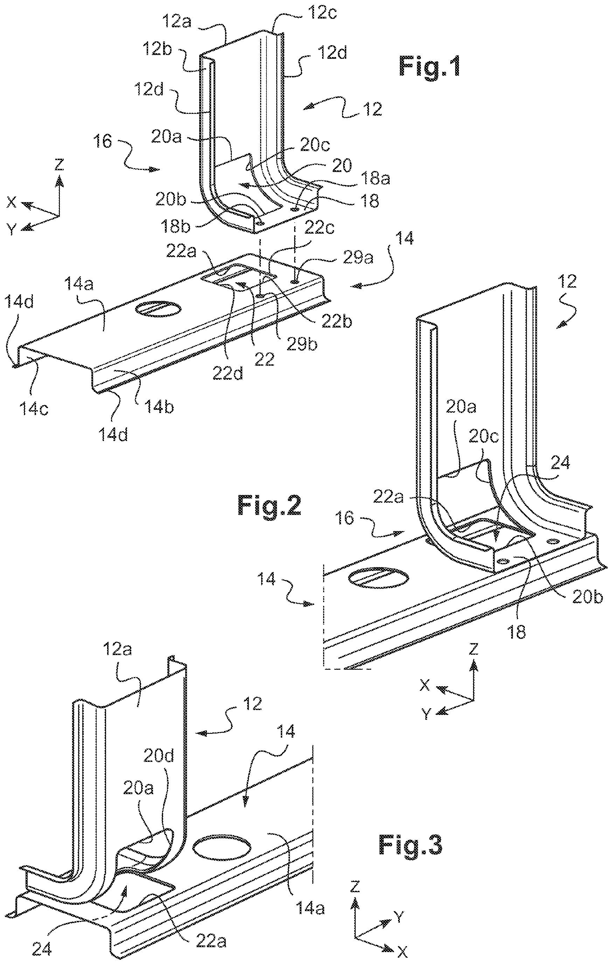

La figure 1 représente un premier insert renfort de longitudinal 12 s'étendant verticalement et un deuxième insert de renfort longitudinal 14 s'étendant horizontalement. Tel que représenté sur cette figure, les directions longitudinales de ces inserts de renfort, 12, 14, sont perpendiculaires. Les premier et deuxième inserts de renfort 12, 14, vont permettre de réaliser un assemblage 10 selon un mode de réalisation de l'invention, tel que décrit ci-après.

Chaque insert de renfort 12, 14, présente une section transversale ouverte concave. Ici, il s'agit d'une forme sensiblement en Ω, formé par des parois planes. Autrement dit, un insert de renfort est formé de plusieurs parois planes reliées les unes aux autres par un bord longitudinal, de section transversale similaire à un Ω.

Ainsi, le premier insert 12 comprend une paroi de fond 12a et deux parois latérales 12b, 12c, de part et d'autre de la paroi de fond 12a. Chacune de ces parois latérales 12b, 12d, présente un rebord 12d s'étendant parallèlement à la paroi de fond 12a, à l'extérieur de l'insert. De manière similaire, le deuxième insert 14 comprend une paroi de fond plane 14a encadrée par deux parois latérales 14b, 14c, chacune de ces parois latérales 14b et 14c présentant un rebord 14d dirigé vers l'extérieur de l'insert.

Dans l'exemple représenté, la paroi de fond 12a du premier insert de renfort 12 s'étend perpendiculairement à la paroi de fond 14a du deuxième insert de renfort 14, et parallèlement à la direction longitudinale du deuxième insert de renfort 14. Cet agencement permet de réduire l'encombrement de l'assemblage des premier et deuxième inserts de renfort.

Le premier insert de renfort 12 comporte une extrémité recourbée 16 dont l'extrémité libre définit une bordure 18. Tel que visible sur les figures 2 et 3, cette bordure 18 est en appui plan contre la paroi de fond 14a du deuxième insert de renfort 14 du côté convexe de celui-ci lorsque les inserts de renfort sont dans leur position d'assemblage.

On notera que la bordure 18 présente deux orifices 18a, 18b la traversant.

L'extrémité recourbée 16 du premier insert de renfort 12 présente en outre une ouverture 20 traversant la paroi de fond 12a.

Dans l'exemple représenté sur les figures, cette ouverture 20 est délimitée par quatre bords 20a, 20b, 20c et 20d. Un premier bord 20a est situé dans une partie de la paroi de fond 12a parallèle à la direction longitudinale de l'insert de renfort 12. Un deuxième bord 20b opposé est situé dans une partie de la paroi de fond 12a sensiblement perpendiculaire à la direction longitudinale du premier insert de renfort 12. On notera que ce deuxième bord 20b délimite la bordure 18. Dans le mode de réalisation représenté, les bords 20a, 20b sont parallèles entre eux et de même longueur, les autres bords 20c, 20d sont courbes, comme l'extrémité recourbée 16.

Le deuxième insert de renfort 14 présente également une ouverture 22 traversant sa paroi de fond 14a. Cette ouverture 22 est également délimitée par quatre bords 22a, 22b, 22c, 22d. L'ouverture 22 présente ici une forme rectangulaire.

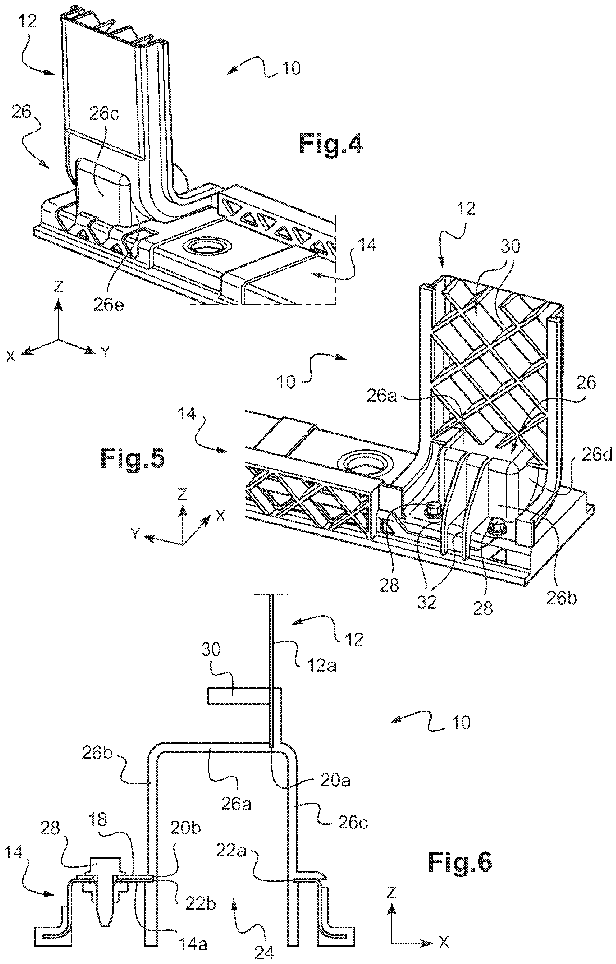

Tel que visible sur les figures 2, 3 et 6, lorsque la bordure 18 de l'extrémité recourbée du premier insert de renfort est en appui contre la paroi de fond 14a du deuxième insert de renfort, les ouvertures 20, 22 sont situées au niveau de la jonction des deux inserts de renfort et sont agencées de manière à définir un passage 24 traversant les deux inserts de renfort 12, 14 suivant une direction parallèle à la direction longitudinale du premier insert de renfort 12 (voir notamment figure 6).

Dans l'exemple représenté (voir notamment figures 2, 3 et 6), on peut ainsi noter que la projection de l'ouverture 20 dans le plan de la paroi de fond 14a, parallèlement à la direction longitudinale du premier insert de renfort 12, coïncide avec une partie des bords de l'ouverture 22, plus précisément avec les bords 22b, 22c et 22d. Notamment, les bords 22b et 20b de ces ouvertures 22, 20 s'étendent l'un le long de l'autre et sont en contact. La projection du bord 20a se trouve à l'intérieur de l'ouverture 22, à proximité de son bord 22a.

Tel que représenté sur les figures 4-6, l'assemblage 10, comprenant le premier insert de renfort 12 et le deuxième insert de renfort 14 est recouvert partiellement d'un matériau polymère. Ce matériau polymère permet notamment d'augmenter la rigidité des inserts de renfort 12 et 14, mais également assure l'assemblage de ces inserts. Le matériau polymère s'étend ainsi en partie au niveau de la jonction des inserts 12, 14.

En particulier, selon l'invention, le matériau polymère forme un élément de renfort 26 s'étendant au moins en partie à l'intérieur du passage 24 et reliant le premier insert de renfort 12 au deuxième insert de renfort 14.

Dans l'exemple représenté, on note que l'élément de renfort 26 relie des bords de l'ouverture 20 du premier insert de renfort 12 à des bords de l'ouverture 22 du deuxième insert de renfort 14.

Notamment, en référence aux figures 4-6, l'élément de renfort 26 présente :
- une première paroi 26a inclinée par rapport à la direction longitudinale du premier insert de renfort (parallèle à la paroi de fond 14a dans l'exemple), cette première paroi 26a traversant l'ouverture 20 du premier insert de renfort 12 et s'étendant de part et d'autre de celui-ci depuis le bord 20a de cette ouverture, au dessus de l'ouverture 22 du deuxième insert de renfort,
- une deuxième paroi 26b reliant un premier bord de la première paroi 26a à un bord opposé de l'ouverture 22 du deuxième insert de renfort 14, à savoir ici le bord 22b,
- une troisième paroi 26c opposée à la deuxième paroi 26b, reliant un deuxième bord de la première paroi 26a à un bord opposé de l'ouverture 22 du deuxième insert de renfort 14, à savoir ici le bord 22a,
- une quatrième paroi 26d reliant un troisième bord de la première paroi 26a à un bord opposé de l'ouverture 22 du deuxième insert de renfort 14, à savoir ici le bord 22c,
- une cinquième paroi 26e opposée à la quatrième paroi 26d, reliant un quatrième bord de la première paroi 26a à un bord opposé de l'ouverture 22 du deuxième insert de renfort 14, à savoir ici le bord 22d.

Dans l'exemple, la paroi 26a présente sensiblement la même forme et les mêmes dimensions que l'ouverture 22 au dessus de laquelle elle s'étend.

Ainsi, les parois 26a-e de l'élément formant renfort 26 définissent un volume hexaédrique accessible par l'une de ses faces, ici située du côté du deuxième insert de renfort 14. On comprend ainsi aisément que l'hexaèdre peut être facilement réalisé par moulage au moyen d'une partie de moule qui vient s'emboîter suivant une direction parallèle à la direction longitudinale du premier insert de renfort 12, du côté de la concavité du deuxième insert de renfort. Dans l'exemple, l'hexaèdre présente une forme régulière dont les parois adjacentes sont perpendiculaires.

L'invention n'est toutefois pas limitée à une forme particulière de l'élément de renfort 26 lequel peut définir un volume de forme différente.

En outre, dans une variante non représentée, l'élément de renfort peut comprendre une unique paroi, par exemple similaire à la paroi 26d, un autre élément de renfort comprenant également une unique paroi, par exemple similaire à la paroi 26e, étant par exemple alors prévu. Ainsi, un élément de renfort peut être constitué d'une paroi ou de plusieurs parois solidaires, et un ou plusieurs éléments de renfort peuvent être envisagés.

On notera que dans l'exemple, les quatrième et cinquième parois 26d-26e s'étendent également le long des bords courbes 20c et 20d de l'ouverture 20 et sont en contact avec ceux-ci.

Tel que visible plus particulièrement figure 6, l'élément de renfort 26 s'étend au moins en partie à l'intérieur du volume défini par la concavité du deuxième insert de renfort 14, notamment sur toute la hauteur de cette concavité selon Z, tel que visible sur la figure.

Enfin, afin de renforcer davantage l'assemblage 10, dans l'exemple, la bordure 18 de l'extrémité recourbée 16 du premier insert de renfort 12 est assemblée au deuxième insert de renfort 14 par au moins un élément de fixation 28 choisi parmi un ensemble vis-écrou, un rivet. Ici, deux éléments de fixation 28 de type vis-écrou sont prévus, chaque élément de fixation 28 traversant un orifice 18a, 18b de la bordure 18 et un orifice 29a, 29b correspondant de la paroi de fond 14a du deuxième insert de renfort.

Le matériau polymère peut en outre former diverses nervures de rigidification permettant de renforcer la jonction entre les deux inserts de renfort 12, 14. De préférence, ces nervures de rigidification présentent une épaisseur sensiblement constante, semblable à l'épaisseur de la couche de matériau polymère recouvrant les inserts.

Tel que visible plus particulièrement sur les figures 4 et 5, des nervures de rigidification 30 entrecroisées s'étendent à l'intérieur de la concavité définie par le premier insert de renfort 12, depuis sa paroi de fond 12a. Ces nervures 30 s'étendent également perpendiculairement à la direction longitudinale du premier insert de renfort 12, et à sa paroi de fond 12a, et parallèlement à la direction longitudinale du deuxième insert de renfort 14. Elles remplissent toute l'épaisseur de la concavité définie par le premier insert de renfort 12.

Des nervures de rigidification similaires peuvent s'étendre à l'intérieur de la concavité définie par le deuxième insert de renfort 14, notamment depuis les parois 26b-e de l'élément de renfort 26.

D'autres nervures de rigidification peuvent être réalisées dans le matériau polymère afin de rigidifier l'assemblage 10.

Ainsi, tel que visible sur la figure 5, des nervures 32 peuvent être prévues pour renforcer la paroi 26b de l'élément de renfort 26, ces nervures 32 s'étendant depuis cette paroi 26b, perpendiculairement à celle-ci et à la paroi de fond 14a du deuxième insert de renfort 14.

Le procédé de fabrication d'un assemblage selon l'invention va maintenant être décrit.

Au cours d'une première étape, on réalise les premiers et deuxième inserts de renfort 12, 14, par exemple par des opérations d'emboutissage afin que ces derniers présentent chacun une paroi de fond encadrée de deux parois latérales et une section transversale ouverte concave, notamment sensiblement en forme de U ou Ω. Les ouvertures 20, 22 peuvent être percées lors de la mise en forme des inserts 12, 14 ou au préalable. Au cours de cette étape (i) on recourbe également l'extrémité du premier insert de renfort 12 au niveau de son ouverture 20. Cette opération peut être effectuée par cintrage voire par pliage. Le rayon de courbure de cette extrémité 16 peut être variable, en fonction de l'encombrement disponible.

Au cours d'une deuxième étape de positionnement, les inserts de renfort 12, 14 sont positionnés dans un moule en plusieurs parties de sorte que leurs directions longitudinales soient sensiblement perpendiculaires. Ils sont également positionnés de sorte que la bordure 18 soit positionnée en appui plan contre la paroi de fond 14a du deuxième insert 14, du côté convexe de celui-ci, les ouvertures 20, 22 définissant alors le passage 24 traversant les deux inserts de renfort suivant une direction parallèle à la direction longitudinale du premier insert de renfort.

Au cours d'une troisième étape d'injection, un matériau polymère est injecté à l'intérieur du moule. Ce surmoulage du matériau polymère sur les inserts de renfort est de préférence réalisé par injection dans le moule réalisé en plusieurs parties. On recouvre ainsi de matériau polymère les premier et deuxièmes inserts de renfort 12, 14 au moins au niveau de leur jonction et on forme l'élément de renfort 26, en laissant libre les orifices 18a, 18b et 29a, 29b. Notamment, l'élément de renfort 26 est formé par une partie de moule qui est insérée dans le passage 24.

Après démoulage des inserts de renfort 12, 14 ainsi assemblés par le matériau polymère, on peut mettre en place les éléments de fixation 28.

On obtient ainsi un assemblage particulièrement léger et robuste.

## Revendications

1. Assemblage (10) d'un premier insert de renfort longitudinal (12) et d'un deuxième insert de renfort longitudinal (14) par un matériau polymère les recouvrant au moins partiellement au moins au niveau de leur jonction, chaque insert de renfort (12, 14) présentant une paroi de fond (12a, 14a) encadrée de deux parois latérales et une section transversale ouverte concave, notamment sensiblement en forme de U ou Ω, les directions longitudinales desdits inserts de renfort étant sensiblement perpendiculaires, **caractérisé en ce que** :
- le premier insert de renfort (12) comporte une extrémité recourbée (16) dont une extrémité libre définit une bordure (18) en appui plan contre la paroi de fond (14a) du deuxième insert de renfort (14) du côté convexe de celui-ci,
- l'extrémité recourbée (16) du premier insert de renfort et le deuxième insert de renfort (14) présentent chacun au niveau de leur jonction une ouverture (20, 22) traversant leur paroi de fond (12a, 14a), lesdites ouvertures (20, 22) définissant un passage (24) traversant les deux inserts de renfort (12, 14) suivant une direction parallèle à la direction longitudinale du premier insert de renfort,
- le matériau polymère forme au moins un élément de renfort (26) s'étendant au moins en partie à l'intérieur du passage (24) et reliant le premier insert de renfort (12) au deuxième insert de renfort (14).

2. Assemblage (10) selon la revendication 1, **caractérisé en ce que** l'élément de renfort (26) relie des bords de l'ouverture (20) du premier insert de renfort (12) à des bords de l'ouverture (22) du deuxième insert de renfort (14).

3. Assemblage (10) selon l'une quelconque des revendications 1 ou 2, **caractérisé en ce que** l'ouverture (20) du premier insert de renfort est délimitée en partie par un premier bord (20a) situé dans une partie de la paroi de fond (12a) parallèle à la direction longitudinale du premier insert de renfort (12) et en partie par un deuxième bord (20b) opposé situé dans une partie de la paroi de fond (12a) sensiblement perpendiculaire à la direction longitudinale du premier insert de renfort (12), et **en ce que** l'élément de renfort (26) relie le premier bord (20a) au moins au deuxième bord (20b) opposé du premier insert de renfort et à un bord (22a) de l'ouverture (22) du deuxième insert de renfort.

4. Assemblage (10) selon la revendication 3, **caractérisé en ce que** le deuxième bord (20b) de l'ouverture (20) du premier insert de renfort coïncide avec un bord (22b) de l'ouverture (22) du deuxième insert de renfort.

5. Assemblage (10) selon l'une quelconque des revendications 1 à 4, **caractérisé en ce que** l'élément de renfort (26) présente :
- une première paroi (26a) inclinée par rapport à la direction longitudinale du premier insert de renfort, ladite première paroi (26a) traversant l'ouverture (20) du premier insert de renfort (12) et s'étendant de part et d'autre de celui-ci depuis un bord (20a) de cette ouverture, au dessus de l'ouverture (22) du deuxième insert de renfort,
- une deuxième paroi (26b) et une troisième paroi (26c) opposée à la deuxième paroi, reliant chacune un bord de la première paroi (26a) à un bord opposé de l'ouverture (22) du deuxième insert de renfort.

6. Assemblage (10) selon la revendication 5, **caractérisé en ce que** l'élément de renfort (26) présente en outre une quatrième paroi (26d) et une cinquième paroi (26e) opposée à la quatrième paroi (26d), reliant chacune un bord de la première paroi (26a) à un bord opposé de l'ouverture du deuxième insert de renfort, lesdites quatrième et cinquième parois définissant avec les première, deuxième et troisième parois un hexaèdre dont une face est ouverte.

7. Assemblage (10) selon l'une quelconque des revendications 1 à 6, **caractérisé en ce que** l'élément de renfort (26) s'étend au moins en partie à l'intérieur du volume défini par la concavité du deuxième insert de renfort (14).

8. Assemblage (10) selon l'une quelconque des revendications 1 à 7, **caractérisé en ce que** la bordure (18) de l'extrémité recourbée (16) du premier insert de renfort est assemblée au deuxième insert de renfort (14) par au moins un élément de fixation (28) choisi parmi un ensemble vis-écrou, un rivet.

9. Face avant technique de véhicule automobile comprenant au moins un assemblage (10) selon l'une quelconque des revendications 1 à 8, dans laquelle le deuxième insert de renfort (14) forme une traverse horizontale, notamment inférieure, et le premier insert de renfort (12) forme un montant vertical.

10. Procédé de fabrication d'un assemblage (10) comprenant un premier insert de renfort longitudinal (12) et un deuxième insert de renfort longitudinal (14), ledit procédé comprenant :
(i) une étape de réalisation des premier et deuxième inserts de renfort, chaque insert de renfort (12, 14) présentant une paroi de fond (12a, 14a) encadrée de deux parois latérales et une section transversale ouverte concave, notamment sensiblement en forme de U ou Ω, au cours de laquelle :
- on recourbe une extrémité (16) du premier insert de renfort est et on la perce afin de former une ouverture (20) traversant sa paroi de fond (12a),
- on perce le deuxième insert de renfort (14) afin de former une ouverture (22) traversant sa paroi de fond (14a),
(ii) une étape de positionnement des inserts de renfort (12, 14) réalisés à l'étape précédente dans un moule, dans laquelle les inserts de renfort (12, 14) sont disposés de sorte que leurs directions longitudinales soient sensiblement perpendiculaires, et au cours de laquelle une bordure (18) définie par une extrémité libre de l'extrémité recourbée (16) du premier insert de renfort est positionnée en appui plan contre la paroi de fond (14a) du deuxième insert, du côté convexe de celui-ci, de sorte que les ouvertures (20, 22) définissent un passage (24) traversant les deux inserts de renfort suivant une direction parallèle à la direction longitudinale du premier insert de renfort (12),
(iii) une étape d'injection d'un matériau polymère à l'intérieur du moule, au cours de laquelle un matériau polymère recouvre au moins partiellement lesdits inserts de renfort (12, 14) au moins au niveau de leur jonction et forme au moins un élément de renfort (26) s'étendant au moins en partie à l'intérieur du passage (24) et reliant le premier insert de renfort (12) au deuxième insert de renfort (14).

## Patentansprüche

1. Anordnung (10) eines ersten Längsverstärkungseinsatzes (12) und eines zweiten Längsverstärkungseinsatzes (14) durch ein Polymermaterial, das sie zumindest teilweise zumindest an ihrer Verbindung abdeckt, wobei jeder Verstärkungseinsatz (12, 14) eine Bodenwand (12a, 14a), die von zwei Seitenwänden eingerahmt ist, und einen offenen konkaven Querschnitt aufweist, der insbesondere im Wesentlichen die U- oder Ω-förmig ist, wobei die Längsrichtungen der Verstärkungseinsätze im Wesentlichen senkrecht verlaufen, **dadurch gekennzeichnet, dass**:
- der erste Verstärkungseinsatz (12) ein gekrümmtes Ende (16) aufweist, dessen eines freie Ende eine Kante (18) in ebener Anlage an der Bodenwand (14a) des zweiten Verstärkungseinsatzes (14) auf der konvexen Seite desselben definiert,
- wobei das gekrümmte Ende (16) des ersten Verstärkungseinsatzes und der zweite Verstärkungseinsatz (14) jeweils an ihrer Verbindung eine Öffnung (20, 22) aufweisen, die ihre Bodenwand (12a, 14a) durchquert, wobei die Öffnungen (20, 22) einen Durchgang (24) definieren, der die zwei Verstärkungseinsätze (12, 14) entlang einer Richtung parallel zur Längsrichtung des ersten Verstärkungseinsatzes durchquert,
- wobei das Polymermaterial mindestens ein Verstärkungselement (26) bildet, das sich zumindest teilweise innerhalb des Durchgangs (24) erstreckt und den ersten Verstärkungseinsatz (12) mit dem zweiten Verstärkungseinsatz (14) verbindet.

2. Anordnung (10) nach Anspruch 1, **dadurch gekennzeichnet, dass** das Verstärkungselement (26) die Ränder der Öffnung (20) des ersten Verstärkungseinsatzes (12) mit Rändern der Öffnung (22) des zweiten Verstärkungseinsatzes (14) verbindet.

3. Anordnung (10) nach einem der Ansprüche 1 oder 2, **dadurch gekennzeichnet, dass** die Öffnung (20) des ersten Verstärkungseinsatzes teilweise von einem ersten Rand (20a), der in einem Teilbereich der Bodenwand (12a) parallel zur Längsrichtung des ersten Verstärkungseinsatzes (12) gelegen ist, und teilweise von einem gegenüberliegenden zweiten Rand (20b), der in einem Teilbereich der Bodenwand (12a) gelegen ist, der im Wesentlichen senkrecht zur Längsrichtung des ersten Verstärkungseinsatzes (12) verläuft, begrenzt wird, und dadurch, dass das Verstärkungselement (26) den ersten Rand (20a) zumindest mit dem gegenüberliegenden zweiten Rand (20b) des ersten Verstärkungseinsatzes und mit einem Rand (22a) der Öffnung (22) des zweiten Verstärkungseinsatzes verbindet.

4. Anordnung (10) nach Anspruch 3, **dadurch gekennzeichnet, dass** der zweite Rand (20b) der Öffnung (20) des ersten Verstärkungseinsatzes mit einem Rand (22b) der Öffnung (22) des zweiten Verstärkungseinsatzes kongruiert.

5. Anordnung (10) nach einem der Ansprüche 1 bis 4, **dadurch gekennzeichnet, dass** das Verstärkungselement (26) Folgendes aufweist:
- eine erste Wand (26a), die bezogen auf die Längsrichtung des ersten Verstärkungseinsatzes geneigt ist, wobei die erste Wand (26a) die Öffnung (20) des ersten Verstärkungseinsatzes (12) durchquert und sich beiderseits desselben von einem Rand (20a) dieser Öffnung aus über der Öffnung (22) des zweiten Verstärkungseinsatzes erstreckt,
- eine zweite Wand (26b) und eine dritte Wand (26c), die der zweiten Wand gegenüberliegt, die jeweils einen Rand der ersten Wand (26a) mit einem gegenüberliegenden Rand der Öffnung (22) des zweiten Verstärkungseinsatzes verbinden.

6. Anordnung (10) nach Anspruch 5, **dadurch gekennzeichnet, dass** das Verstärkungselement (26) ferner eine vierte Wand (26d) und eine fünfte Wand (26e), die der vierten Wand (26d) gegenüberliegt, aufweist, die jeweils einen Rand der ersten Wand (26a) mit einem gegenüberliegenden Rand der Öffnung des zweiten Verstärkungseinsatzes verbinden, wobei die vierte und die fünfte Wand mit der ersten, zweiten und dritten Wand einen Hexaeder definieren, dessen eine Fläche offen ist.

7. Anordnung (10) nach einem der Ansprüche 1 bis 6, **dadurch gekennzeichnet, dass** sich das Verstärkungselement (26) zumindest teilweise innerhalb des Volumens erstreckt, das von der Konkavität des zweiten Verstärkungseinsatzes (14) definiert wird.

8. Anordnung (10) nach einem der Ansprüche 1 bis 7, **dadurch gekennzeichnet, dass** die Kante (18) des gekrümmten Endes (16) des ersten Verstärkungseinsatzes durch mindestens ein Befestigungselement (28), das aus einer Schraube-Mutter-Einheit, einer Niete ausgewählt ist, an dem zweiten Verstärkungseinsatz (14) angebracht ist.

9. Technische Vorderseite eines Kraftfahrzeugs, umfassend mindestens eine Anordnung (10) nach einem der Ansprüche 1 bis 8, wobei der zweite Verstärkungseinsatz (14) eine horizontale, insbesondere innere Traverse bildet, und der erste Verstärkungseinsatz (12) einen vertikalen Pfosten bildet.

10. Verfahren zur Herstellung einer Anordnung (10) umfassend einen ersten Längsverstärkungseinsatz (12) und einen zweiten Längsverstärkungseinsatz (14), das Verfahren umfassend:
(i) einen Schritt des Herstellens des ersten und des zweiten Verstärkungseinsatzes, wobei jeder Verstärkungseinsatz (12, 14) eine Bodenwand (12a, 14a), die von zwei Seitenwänden eingerahmt ist, und einen offenen konkaven Querschnitt aufweist, der insbesondere im Wesentlichen U- oder Ω-förmig ist, während welchem:
- ein Ende (16) des ersten Verstärkungseinsatzes gekrümmt wird und es durchdrungen wird, um eine Öffnung (20) zu bilden, die dessen Bodenwand (12a) durchquert,
- der zweite Verstärkungseinsatz (14) durchdrungen wird, um eine Öffnung (22) zu bilden, die dessen Bodenwand (14a) durchquert,
(ii) einen Schritt des Positionierens der Verstärkungseinsätze (12, 14), die in dem vorhergehenden Schritt hergestellt wurden, in einer Form, wobei die Verstärkungseinsätze (12, 14) so angeordnet werden, dass ihre Längsrichtungen im Wesentlichen senkrecht verlaufen, und während welchem eine Kante (18), die von einem freien Ende des gekrümmten Endes (16) des ersten Verstärkungseinsatzes definiert wird, in ebener Anlage an der Bodenwand (14a) des zweiten Einsatzes auf der konvexen Seite desselben positioniert wird, so dass die Öffnungen (20, 22) einen Durchgang (24) definieren, der die zwei Verstärkungseinsätze entlang einer Richtung parallel zur Längsrichtung des ersten Verstärkungseinsatzes (12) durchquert,
(iii) einen Schritt des Einspritzens eines Polymermaterials in das Innere der Form, während welchem ein Polymermaterial die Verstärkungseinsätze (12, 14) zumindest an ihrer Verbindung zumindest teilweise abdeckt und mindestens ein Verstärkungselement (26) bildet, das sich zumindest teilweise im Inneren des Durchgangs (24) erstreckt und den ersten Verstärkungseinsatz (12) mit dem zweiten Verstärkungseinsatz (14) verbindet.

## Claims

1. Assembly (10) of a first longitudinal reinforcing insert (12) and a second longitudinal reinforcing insert (14) by means of a polymer material covering them at least partially, at least at their junction, each reinforcing insert (12, 14) having a base wall (12a, 14a) flanked by two side walls and a concave open cross-section which is in particular substantially U- or Ω-shaped, the longitudinal directions of said reinforcing inserts being substantially perpendicular, **characterized in that**:
- the first reinforcing insert (12) comprises a curved end (16), one free end of which defines a rim (18) resting flat against the base wall (14a) of the second reinforcing insert (14) on its convex side,
- the curved end (16) of the first reinforcing insert and the second reinforcing insert (14) each have, at their junction, an opening (20, 22) through their base wall (12a, 14a), said openings (20, 22) defining a passage (24) through the two reinforcing inserts (12, 14) in a direction parallel to the longitudinal direction of the first reinforcing insert,
- the polymer material forms at least one reinforcing element (26) extending at least partially inside the passage (24) and connecting the first reinforcing insert (12) to the second reinforcing insert (14).

2. Assembly (10) according to Claim 1, **characterized in that** the reinforcing element (26) connects the edges of the opening (20) of the first reinforcing insert (12) to the edges of the opening (22) of the second reinforcing insert (14).

3. Assembly (10) according to either of claims 1 and 2, **characterized in that** the opening (20) of the first reinforcing insert is partially delimited by a first edge (20a) situated in a part of the base wall (12a) parallel to the longitudinal direction of the first reinforcing insert (12), and partially by a second opposite edge (20b) situated in a part of the base wall (12a) substantially perpendicular to the longitudinal direction of the first reinforcing insert (12), and **in that** the reinforcing element (26) connects the first edge (20a) at least to the second opposite edge (20b) of the first reinforcing insert and to an edge (22a) of the opening (22) of the second reinforcing insert.

4. Assembly (10) according to Claim 3, **characterized in that** the second edge (20b) of the opening (20) of the first reinforcing insert coincides with an edge (22b) of the opening (22) of the second reinforcing insert.

5. Assembly (10) according to any of Claims 1 to 4, **characterized in that** the reinforcing element (26) has:
- a first wall (26a) inclined relative to the longitudinal direction of the first reinforcing insert, said first wall (26a) passing through the opening (20) of the first reinforcing insert (12) and extending on either side thereof from an edge (20a) of this opening above the opening (22) of the second reinforcing insert,
- a second wall (26b) and a third wall (26c) opposite the second wall, each connecting an edge of the first wall (26a) to an opposite edge of the opening (22) of the second reinforcing insert.

6. Assembly (10) according to Claim 5, **characterized in that** the reinforcing element (26) also has a fourth wall (26d) and a fifth wall (26e) opposite the fourth wall (26d), each connecting an edge of the first wall (26a) to an opposite edge of the opening of the second reinforcing insert, said fourth and fifth walls, together with the first, second and third walls, defining a hexahedron, one face of which is open.

7. Assembly (10) according to any of Claims 1 to 6, **characterized in that** the reinforcing element (26) extends at least partially inside the volume defined by the concavity of the second reinforcing insert (14).

8. Assembly (10) according to any of Claims 1 to 7, **characterized in that** the rim (18) of the curved end (16) of the first reinforcing insert is attached to the second reinforcing insert (14) by at least one fixing element (28) selected from a bolt-nut assembly or a rivet.

9. Technical front surface of a motor vehicle comprising at least one assembly (10) according to any of Claims 1 to 8, wherein the second reinforcing insert (14) forms a horizontal, in particular lower crossmember, and the first reinforcing insert (12) forms a vertical pillar.

10. Method for producing an assembly (10) comprising a first longitudinal reinforcing insert (12) and a second longitudinal reinforcing insert (14), said method comprising:
(i) a step of producing the first and second reinforcing inserts, each reinforcing insert (12, 14) having a base wall (12a, 14a) flanked by two side walls and a concave open cross-section, which is in particular substantially U or Q-shaped, during which step:
- an end (16) of the first reinforcing insert is curved and pierced in order to form an opening (20) through its base wall (12a),
- the second reinforcing insert (14) is pierced in order to form an opening (22) through its base wall (14a),
(ii) a step of positioning the reinforcing inserts (12, 14) produced in the preceding step in a mold, in which the reinforcing inserts (12, 14) are arranged such that their longitudinal directions are substantially perpendicular, and during which step a rim (18) defined by a free end of the curved end (16) of the first reinforcing insert is positioned resting flat against the base wall (14a) of the second insert on its convex side, such that the openings (20, 22) define a passage (24) through the two reinforcing inserts in a direction parallel to the longitudinal direction of the first reinforcing insert (12),
(iii) a step of injecting a polymer material inside the mold, during which a polymer material covers said reinforcing inserts (12, 14) at least partially, at least at their junction, and forms at least one reinforcing element (26) extending at least partially inside the passage (24) and connecting the first reinforcing insert (12) to the second reinforcing insert (14).
